(19) Europäisches Patentamt
European Patent Office
Office européen des brevets

(11) EP 0 498 461 B1

(12) **EUROPEAN PATENT SPECIFICATION**

(45) Date of publication and mention of the grant of the patent:
**05.11.1997 Bulletin 1997/45**

(51) Int Cl.6: **G11B 11/10**

(21) Application number: **92102091.3**

(22) Date of filing: **07.02.1992**

(54) **System and method of reproducing signals recorded on a magneto-optic recording medium**

System und Verfahren zur Wiedergabe von Signalen aufgezeichnet auf einem magnetooptischer Aufzeichnungsmedium

Système et méthode pour la réproduction des signaux enregistrés sur un milieu d'enregistrement magnéto-optique

(84) Designated Contracting States:
**AT DE FR GB**

(30) Priority: **08.02.1991 JP 18072/91**
**08.02.1991 JP 18075/91**

(43) Date of publication of application:
**12.08.1992 Bulletin 1992/33**

(60) Divisional application: **97104811.1**

(73) Proprietor: **SONY CORPORATION**
**Tokyo (JP)**

(72) Inventors:
- **Ohta, Masumi**
**Shinagawa-ku, Tokyo (JP)**
- **Nakao, Isamu**
**Shinagawa-ku, Tokyo (JP)**
- **Aratani, Katsuhisa**
**Shinagawa-ku, Tokyo (JP)**

(74) Representative: **Müller, Frithjof E., Dipl.-Ing.**
**Patentanwälte**
**MÜLLER & HOFFMANN,**
**Innere Wiener Strasse 17**
**81667 München (DE)**

(56) References cited:
**EP-A- 0 318 925**
**EP-A- 0 383 386**
**EP-A- 0 405 742**
**EP-A- 0 415 449**
**EP-A- 0 492 553**
**EP-A- 0 492 581**
**US-A- 4 932 012**

Remarks:
Divisional application 97104811.1 filed on 20/03/97.

EP 0 498 461 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

## BACKGROUND OF THE INVENTION

The present invention relates to a system and method of reproducing signals recorded on a magneto-optic recording medium, for reading information bits (magnetic domains) by magneto-optic effect and, more particularly, to techniques for enhancing track recording density and track density, and reproducing information recorded in a high density and for reproducing with high resolution.

According to the fundamental principle of a magneto-optic recording system, a portion of a magnetic thin film is heated locally to a temperature higher than the Curie temperature or the compensation temperature to nullify the coercive force of the heated portion and to invert the direction of magnetization of the heated portion in the direction of an external recording magnetic field applied thereto. Accordingly, the magneto-optic recording system employs a magneto-optic recording medium comprising a transparent substrate, such as a polycarbonate substrate, and a laminated recording layer formed on one major surface of the transparent substrate, and consisting of a magnetic recording film having an easy direction of magnetization perpendicular to its surface and having excellent magneto-optic characteristics, such as an amorphous rare earth metal-transition metal alloy film, a reflecting film and a dielectric film. The magneto-optic recording medium is irradiated with a laser beam from the side of the transparent substrate to read signals.

The track recording density of optical disks, such as digital audio disks (so-called compact disks) and video disks, as well as a magneto-optic recording medium, is dependent principally on the SN ratio of reproduced signals, and the signal quantity of reproduced signals is greatly dependent on the period of the bit string of recorded signals, the wavelength of a laser beam emitted by the laser of a reproducing optical system, and the numerical aperture of the objective lens of the reproducing optical system.

The bit period f corresponding to a detection limit is expressed by: $f = \lambda/2N.A.$, where $\lambda$ is the wave length of a laser beam emitted by the laser of the reproducing optical system, and N.A. is the numerical aperture of the objective lens.

Since crosstalk limiting the track density is dependent mainly on the intensity distribution (profile) of the laser beam on the surface of the recording medium, the track density, similarly to the bit period, is expressed generally by a function of $\lambda/2$ and the numerical aperture N.A.

Accordingly, the reproducing optical system employs, basically, a laser that emits a laser beam of a short wavelength $\lambda$ and an objective lens having a large numerical aperture N.A.

However, according to the present status of the art, an improvement in the wavelength $\lambda$ of the laser beam and the numerical aperture N.A. of the objective lens is limited. On the other hand, techniques have been developed to improve recording density through the improvement of the construction of the magneto-optic recording medium and the reading method.

For example, the applicant of the present patent application proposed a system that improves reproducing resolution by locally enlarging, reducing or extinguishing an information bit (magnetic domain) in reproducing a signal in Japanese Patent Laid-open (Kokai) Nos. Hei 1-143041 and Hei 1-143042, both incorporated herein. This system employs a magnetic recording layer of an exchange-coupled multilayer film consisting of a reproducing layer, an intermediate layer and a record hold layer, and reduces interference between information bits in reproducing signals by heating a magnetic domain of the reproducing layer with a reproducing light beam to enlarge, reduce or extinguish a portion of the magnetic domain heated at a high temperature to enable the reproduction of signals of a period beyond the limit of diffraction of light.

Although the track recording density can be improved to some extent by this system, it is difficult to improve the track density by this system.

Under such circumstances, the applicant of the present patent application proposed a novel signal reproducing method capable of preventing crosstalk and improving both track recording density and track density in Japanese Patent Laid-open (Kokai) No. Hei 1-229395, incorporated herein. This method employs a recording layer of a multilayer film consisting of a reproducing layer and a record hold layer magnetically coupled with the reproducing layer. The direction of magnetization of the reproducing layer is turned beforehand in a direction to erase signals in the reproducing layer. The reproducing layer is heated to a temperature higher than a predetermined temperature by irradiating the reproducing layer with a laser beam when reproducing signals so as to transfer only the magnetic signals written in the heated region of the record hold layer to the reproducing layer in order to read the magnetic signals.

In reading information recorded in information recording bits, i.e., bubble magnetic domains, formed in a magneto-optic recording medium by locally heating the magneto-optic recording medium with a laser beam by a magneto-optic recording/reproducing system utilizing magneto-optic mutual action, namely, the Kerr effect or Faraday effect, as explained above the recording bits must be formed in a reduced size to increase recording density for magneto-optic recording. However, the reduction in size of recording bits entails problems in resolution, as described above, in reproducing recorded information. Resolution is dependent on the wavelength of the reproducing laser beam, and the numerical aperture N.A. of the objective lens.

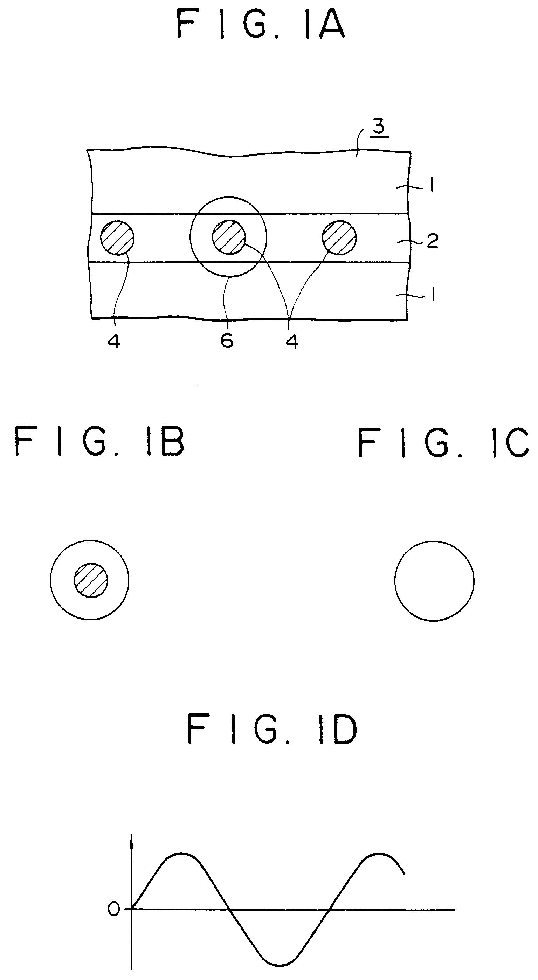

A conventional magneto-optic recording/reproducing system will be described with reference to Figures 1A, 1B, 1C, and 1D. Figure 1A is a typical top plan view of a recording pattern. A method of reproducing binary signals "1" and "0" recorded in recording bits 4, i.e. shaded portions in Figure 1A, of a magneto-optic recording medium 3, such as a magneto-optic disk, will be described. A reading laser beam forms a circular spot 6 on the magneto-optic recording medium 3. When recording bits 4 are spaced so that the spot 6 is able to include only one recording bit 4 as shown in Figure 1A, the spot 6 includes a recording bit 4 as shown in Figure 1B, or the spot 6 does not include any recording bit 4 as shown in Figure 1C. Accordingly, if the recording bits 4 are arranged at equal intervals, the output signal has, for example, a sinusoidal waveform whose amplitude varies alternately above and below a reference level 0 as shown in Figure 1D.

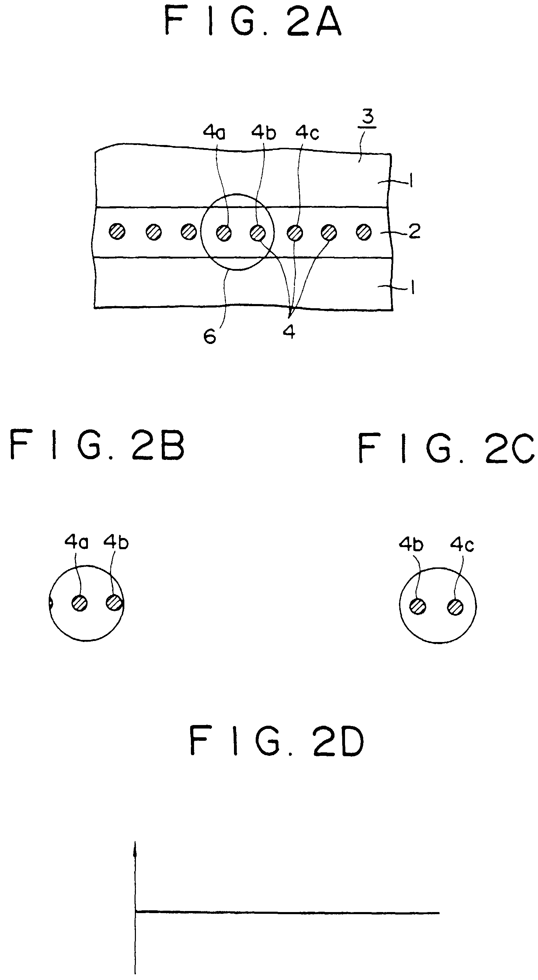

However, if recording bits 4 are arranged in a high density as shown in a typical plan view of a recording pattern in Figure 2A, it is possible that the spot 6 includes a plurality of recording bits 4. Since a reproduced output signal provided when the two recording bits 4a and 4b among the successive three recording bits 4a, 4b, and 4c are included in one spot 6 as shown in Figure 2B and a reproduced output signal provided when the two recording bits 4b and 4c are included in one spot 6 as shown in Figure 2C are the same and cannot be discriminated from each other, the reproduced output signals form, for example, a straight line as shown in Figure 2D.

Since the conventional magneto-optic recording/reproducing system reads directly the recording bits 4 recorded on the magneto-optic recording medium 3, the restrictions on the reproducing resolutions cause problems in S/N (C/N - carrier-to-noise ratio) and hence the magneto-optic recording/reproducing system is unable to achieve high-density recording and reproducing, even if the magneto-optic recording/reproducing system is capable of high-density recording, i.e., high-density bit formation.

The reproducing resolution dependent on the wavelength $\lambda$ of the laser beam and the numerical aperture N.A. of the lens must be improved to solve the problems in S/N (C/N). To solve these problems, the applicant of the present patent application proposed previously a magneto-optic recording/reproducing system capable of very high resolution (hereinafter referred to as "MSR system"), for example, in Japanese Patent Application No. Hei 1-225685, "Magneto-optic Recording/Reproducing Method", incorporated herein.

The MSR system enhances the reproducing resolution by reading only the recording bit 4 of a temperature in a predetermined temperature range on a magneto-optic recording medium by utilizing a temperature distribution formed by the relative movement between the magneto-optic recording medium and the spot 6 of the reproducing beam.

The MSR systems are classified into those of a so-called emergence type and those of an extinction type.

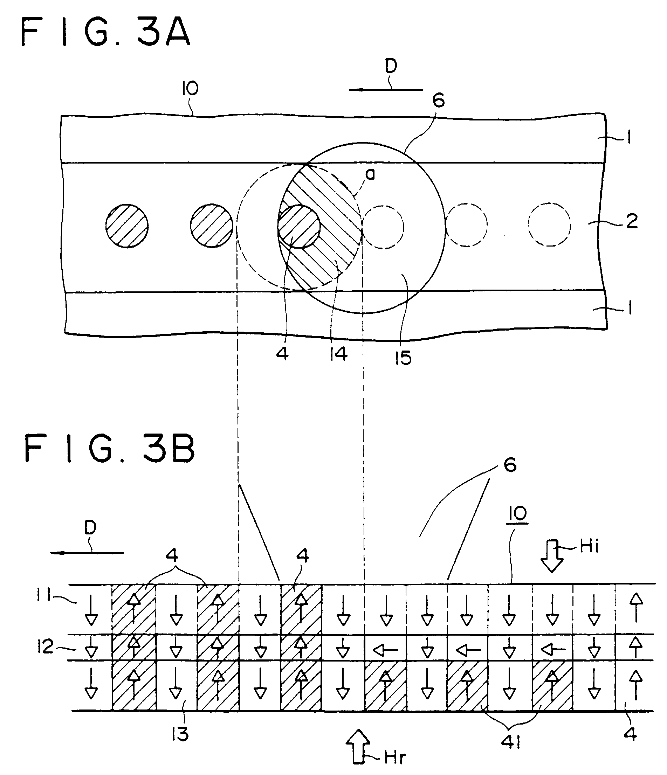

The MSR system of an emergence type is disclosed by EP-A-0492581 which fails under the provision of Art. 54 (3) EPC. It will be described with reference to Figures 3A, and 3B. Figure 3A is a typical top plan view of a recording pattern formed on a magneto-optic recording medium 10, and Figure 3B is a typical sectional view showing a state of magnetization of the magneto-optic recording medium. As shown in Figure 3A, the magneto-optic recording medium 10 moves in the direction of an arrow D relative to the spot 6 of a laser beam. As shown in Figure 3B, the magneto-optic recording medium 10 is, for example, a magneto-optic disk having at least a reproducing layer 11 and a recording layer 13 formed of perpendicularly magnetizable films. The reproducing layer 11, the recording layer 13 and an intermediate layer 12 formed between the reproducing layer 11 and the recording layer 13 are provided. Arrows in the layers 11, 12, and 13 in Figure 3B indicate the directions of magnetic moment. In Figure 3B, magnetic domains indicated by downward arrows are in an initial state. Information recording bits 4 are formed at least in the recording layer 13 with magnetic domains magnetized upward for binary values "1" or "0".

In reproducing recorded information signals from the magneto-optic recording medium 10, an external initializing magnetic field $H_i$ is applied to the magneto-optic recording medium 10 to magnetize the reproducing layer 11 downward, as viewed in Figure 3B, for initialization. Although the recording bits of the reproducing layer 11 are extinguished by initialization, the respective directions of magnetization of regions in the reproducing layer 11 and the recording layer 13 corresponding to the recording bits 4 are maintained reverse to each other by magnetic domain walls formed in the intermediate layer 12, so that the recording bits 4 remain in latent recording bits 41.

A reproducing magnetic field $H_r$ of a direction reverse to that of the initializing magnetic field $H_i$ is applied at least to the reproducing regions of the magneto-optic recording medium 10. As the magneto-optic recording medium 10 moves, the region having the initialized latent recording bit 41 comes under the spot 6. Since the duration of irradiation with the beam in the front side, the left side in Figures 3A and 3B, on the magneto-optic recording medium 10 with respect to the direction of movement is longer, a high-temperature region 14 is formed in the front side of the spot 6 as indicated by a shaped area enclosed by a broken line **a**. In the high-temperature region 14, magnetic domain walls in the intermediate layer 12 disappear, and the magnetization of the recording layer 13 is transferred to the reproducing layer 11 by exchange force, so that the latent recording bit 41 in the recording layer 13 emerges in the reproducing layer 11 in a reproducible recording bit 4.

Accordingly, the recording bit 4 can be read out by detecting the rotation of the plane of polarization of the spot 6 by magneto-optic effect, namely, Kerr effect or Faraday effect, corresponding to the direction of magnetization of the reproducing layer 11. Latent recording bits 41 in a low-temperature region 15, other than the high-temperature region 14, in the spot 6 do not emerge into the reproducing layer 11, and hence the reproducible recording bit 4 is included only in the narrow high-temperature region 14. Therefore, even if information is recorded in a high recording density on the magneto-optic recording medium 10 capable of high-density recording, in which a plurality of recording bits 4 are included in the spot 6, only one of the recording bits 4 can be read for high-resolution signal reproducing.

To carry out signal reproducing in such a mode, the initializing magnetic field $H_i$, the reproducing magnetic field $H_r$, the respective coercive force, values of thickness, intensities of magnetization and values of domain wall energy of the magnetic layers are determined selectively according to the temperature or the high-temperature region 14 and that of the low-temperature region 15. The coercive force $H_{c1}$, thickness $h_1$ and saturation magnetization $M_{s1}$ of the reproducing layer 11, and the coercive force $H_{c3}$, thickness $h_3$ and saturation magnetization $M_{s2}$ of the recording layer 13 must meet an expression in Mathematical 1 to initialize only the reproducing layer 11.

$$\text{(Mathematical 1)} \qquad H_i > H_{c1} + \sigma_{w2}/2M_{s1} \cdot h_1$$

where $\sigma_{w2}$ is domain wall energy of the magnetic domain wall between the reproducing layer 11 and the recording layer 13.

An expression in Mathematical 3 must be met to maintain the information recorded in the recording layer 13 by the magnetic field.

$$\text{(Mathematical 3)} \qquad H_i < H_{c3} - \sigma_{w2}/2M_{s3} \cdot h_3$$

An expression in Mathematical 4 must be met to maintain the magnetic domain walls formed in the intermediate layer 12 between the reproducing layer 11 and the recording layer 13 after the initializing magnetic field $H_i$ has been applied to the magneto-optic recording medium.

$$\text{(Mathematical 4)} \qquad H_{c1} > \sigma_{w2}/2M_{s1} \cdot h_1$$

An expression in Mathematical 5 must be met to heat the high-temperature region 14 at a selected temperature $T_H$.

$$\text{(Mathematical 5)} \qquad H_{c1} - \sigma_{w2}/2M_{s1} \cdot h_1 < H_r < H_{c1} + \sigma_{w2}/2M_{s1} \cdot h_1$$

The magnetization of the latent recording bits 41 of the recording layer 13 can be transferred to, namely, binary values "1" and "0", which can be made to emerge in only regions of the reproducing layer 11 corresponding to the magnetic domain walls of the intermediate layer 12 by applying the reproducing magnetic field $H_r$ meeting the expression in Mathematical 5.

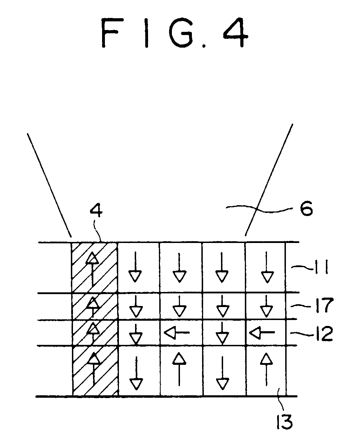

Although the magneto-optic recording medium 10 employed by the MSR system has the reproducing layer 11, the intermediate layer 12 and the recording layer 13 forming a three-layer construction, the MSR system may employ a four-layer magneto-optic recording medium additionally provided with an auxiliary reproducing layer 17 between the reproducing layer 11 and the intermediate layer 12 as shown in an enlarged schematic sectional view in Figure 4.

The auxiliary reproducing layer 17 supplements the characteristics of the reproducing layer 11 to compensate the coercive force of the reproducing layer 11 at a room temperature to stabilize the magnetization of the reproducing layer 11 caused by the initializing magnetic field $H_i$ regardless of the existence of magnetic domain walls and to decrease the coercive force sharply at a temperature near the reproducing temperature so that the magnetic domain walls of the intermediate layer 12 expand into the auxiliary reproducing layer 17 to finally invert the reproducing layer 11 and to extinguish the magnetic domain walls for satisfactory emergence of the recording bits.

The coercive force $H_{c1}$ of the reproducing layer 11 of a four-layer magneto-optic recording medium provided with the auxiliary reproducing layer 17 is substituted by $H_{CA}$ as expressed by an expression in Mathematical 6, and $\sigma_{w2}/M_{s1} \cdot h_1$ is substituted by $\sigma_{w2}/(M_{s1} \cdot h_1 + M_{ss} \cdot h_s)$ .

$$\text{(Mathematical 6)} \qquad H_{CA} = (M_{s1} \cdot h_1 \cdot H_{c1} + M_{ss} \cdot h_s \cdot H_{cs})/(M_{s1} \cdot h_1 + M_{ss} \cdot h_s).$$

where $H_{c1} < H_{CA} < H_{cs}$ for the MSR system of an emergence type.

In Mathematical 6, $M_{ss}$ $h_s$ and $H_{cs}$ are the saturation magnetization, thickness and coercive force, respectively, of the auxiliary reproducing layer 17.

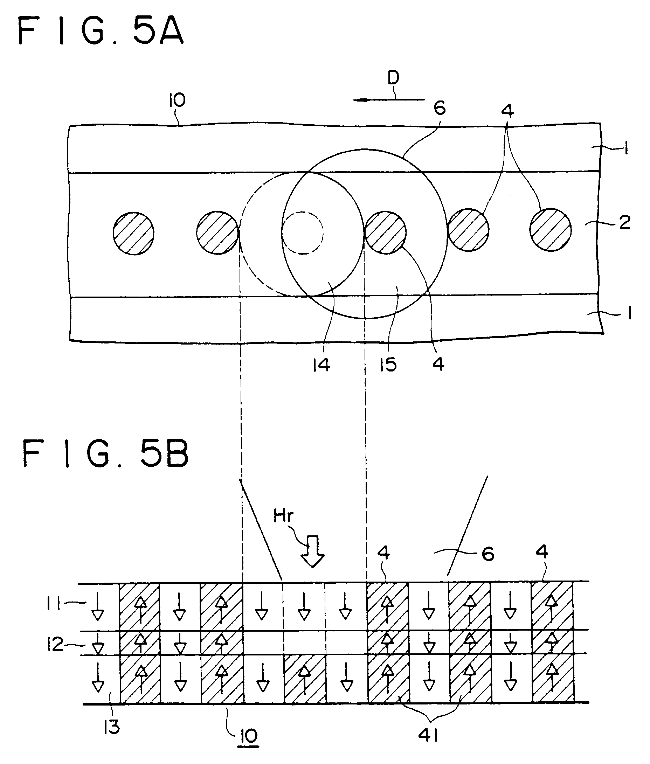

The MSR system of an extinction type will be described hereinafter with reference to Figures 5A and 5B. Figure 5A is a typical top plan view of a recording pattern formed on a magneto-optic recording medium 10, and Figure 5B is a typical sectional view showing a state of magnetization, in which parts like or corresponding to those shown in Figures 3A and 3B are denoted by the same reference characters and the description thereof will be omitted to avoid duplication. This magneto-optic recording medium does not need any initializing magnetic field $H_i$.

A reproducing operation for reproducing information recorded on the magneto-optic recording medium 10 will be described. The high-temperature region 14 is heated so that an expression in Mathematical 7 is satisfied, and then, an external reproducing magnetic field $H_r$ is applied to the magneto-optic recording medium 10 to extinguish recording bits 4 in the high-temperature region 14 included in the spot 6 of a laser beam in the reproducing layer 11 magnetized downward as viewed in Figure 5B. Thus, the MSR system of an extinction type enables information recorded in only the recording bits 4 in the low-temperature region 15 in the spot 6 to be reproduced to improve the resolution.

$$\text{(Mathematical 7)} \qquad H_r > H_{c1} + \sigma_{w2}/2M_{s1} \cdot h_1$$

However, the conditions including the coercive force are determined so that the recording bits 4 of the recording layer 13 remain in latent recording bits 41 in an extinction state to hold the magnetization of the recording layer 13, i. e., the recording bits 4, are transferred to the reproducing layer 11 and held therein in a reproducible state at a room temperature.

The foregoing MSR systems of an emergence type and an extinction type reproduce the recording bit in a local region included in the spot of the laser beam to reproduce the information in the reproducing layer 11 and to achieve enhanced resolution.

In reproducing signals by these previously proposed signal reproducing methods, however, the area to be transferred to the reproducing layer (reproducible area) expands with the increase of reproducing power, which deteriorates frequency characteristics of reproduction.

## SUMMARY OF THE INVENTION

The present invention has been made in view of the foregoing problems and it is therefore an object of the present invention to further improve the reproducing resolution, namely, S/N (C/N Carrier-to-Noise ratio), in the MSR system.

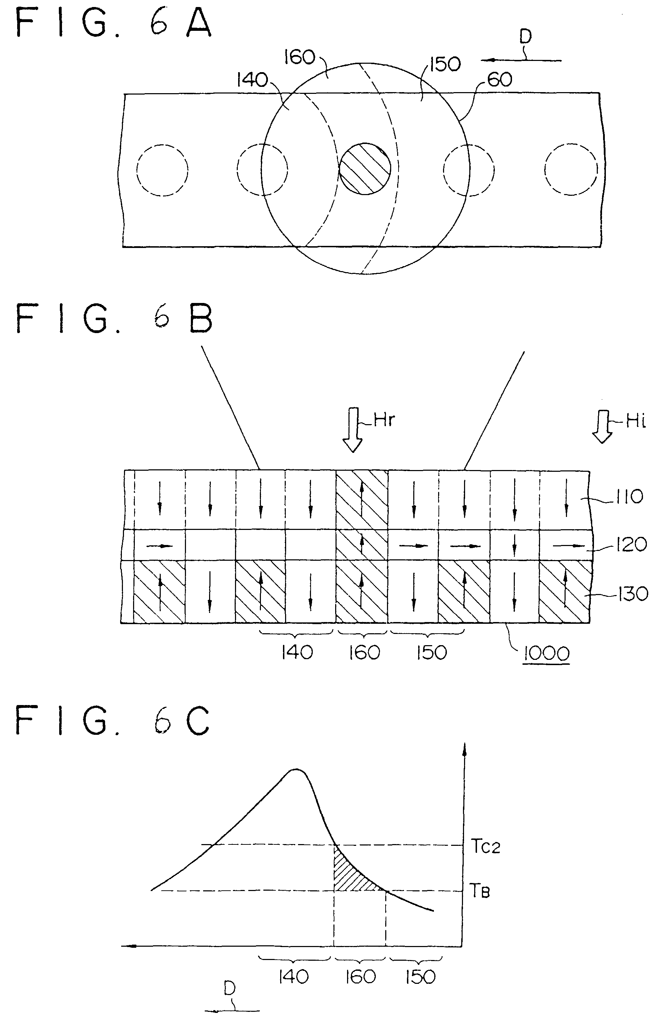

Figure 6A is a typical top plan view of a magneto-optic recording medium employed in carrying out a magneto-optic recording/reproducing system in accordance with an embodiment of the present invention. Figure 6B is a typical sectional view of the same magneto-optic recording medium, and Figure 6C is a graph showing temperature distribution on the same magneto-optic recording medium. The present invention provides a magneto-optic recording/reproducing system comprising irradiating a magneto-optic recording medium 1000 having at least a recording layer 130, a reproducing layer 110, and an intermediate layer 120 formed between the recording layer 130 and the reproducing layer 110. A reading light beam and a reproducing magnetic field $H_r$ having a same direction as that of magnetization of the reproducing layer 110 is provided. A high-temperature region 140 and a reproducible region 160 heated at a temperature suitable for reproducing information are provided in an area irradiated with the reading light beam. A portion of the intermediate layer 120 in the high-temperature region is heated to a temperature not lower than the Curie temperature $T_{c2}$ of the intermediate layer 120. The reproducible region 160 meets an expression: $H_r + H_{CA} < H_{w1}$, where $H_{CA}$ is a coercive force of a layer contributing to reproducing information, and $H_{w1}$ is a magnetic field created by a magnetic domain wall between the reproducing layer 110 and the intermediate layer 120.

## BRIEF DESCRIPTION OF THE DRAWINGS

The above and other objects, features and advantages of the present invention will become more apparent from the following description taken in connection with the accompanying drawings, in which:

Figures 1A to 1D are views for assistance in explaining a conventional magneto-optic recording/reproducing system;
Figures 2A to 2D are views for assistance in explaining a conventional magneto-optic recording/reproducing system;
Figures 3A and 3B are views for assistance in explaining a MSR system of an emergence type;
Figure 4 is a typical sectional view of a magneto-optic recording medium;
Figures 5A and 5B are views for assistance in explaining a MSR system of an extinction type;

Figures 6A to 6C are diagrammatic views for assistance in explaining a magneto-optic recording/reproducing system in an embodiment according to the present invention;

Figure 7 is an enlarged schematic sectional view of a magneto-optic recording medium employed in carrying out the embodiment of the present invention;

Figure 8 is a schematic perspective view for assistance in explaining the magneto-optic recording,/reproducing system in accordance with the embodiment of the present invention;

Figures 9A and 9B are views for assistance in explaining the magneto-optic recording/reproducing system in accordance with the third embodiment of the present invention;

Figure 10 is a graph showing the output characteristics of a magneto-optic recording medium by the magneto-optic recording/reproducing system in accordance with the embodiment of the present invention;

## DESCRIPTION OF THE PREFERRED EMBODIMENTS

A preferred embodiment of the present invention will be described hereinafter with reference to the accompanying drawings.

The magneto-optic recording/reproducing system in accordance with the embodiment of the present invention utilizes the temperature distribution in a portion irradiated with the reading light beam of the magneto-optic recording medium 1000. When the magneto-optic recording medium 1000 moves in the direction of an arrow D shown in Figure 6A, the temperature of an area on the magneto-optic recording medium 1000 starts rising immediately before the area comes into the spot 60 of the reading light beam. The area in the spot 60 is heated to provide a temperature distribution as shown in Figure 6C, in which a region of the area slightly before the center of the spot 60 where the intensity of the light beam is the highest is heated to the highest temperature owing to heat conduction. The magneto-optic recording/reproducing system in accordance with the present invention magnetizes the reproducing layer 110 in a direction for information reproducing, heats the magneto-optic recording medium 1000 so that the high-temperature region 140 is heated to a temperature not lower than the Curie temperature $T_{c2}$ of the intermediate layer 120, and heats the low-temperature region 160 to a temperature lower than the Curie temperature $T_{c2}$ of the intermediate layer 120 so that the expression in Mathematical 1 is satisfied. Consequently, in the high-temperature region on the magneto-optic recording medium 1000, the intermediate layer 120 is demagnetized, and the direction of magnetization of the reproducing layer 110 is turned in the direction of the reproducing magnetic field $H_r$, regardless of the magnetization of the recording layer 130. In the reproducible region 160, the magnetization of the recording layer 130 is transferred to the reproducing layer 110 against the reproducing magnetic field $H_r$ to meet the expression in Mathematical 1. Thus, the direction of magnetization of a region heated at a temperature lower than that at which the reproducible region 160 is heated and not meeting the expression in Mathematical 1 remains in the direction of initial magnetization, which is the same as the direction of the reproducing magnetic field $H_r$.

Accordingly, the area corresponding to the spot 60 of the reading light beam on the magneto-optic recording medium 1000, the direction of magnetization of the reproducing layer 110 other than the reproducible region 160, is turned in the direction of the reproducing magnetic field $H_r$, and only a recording bit 4 in the recording layer 130 corresponding to the reproducible region 160 is transferred to the reproducing layer 110 so that binary values "1" and "0" can be read.

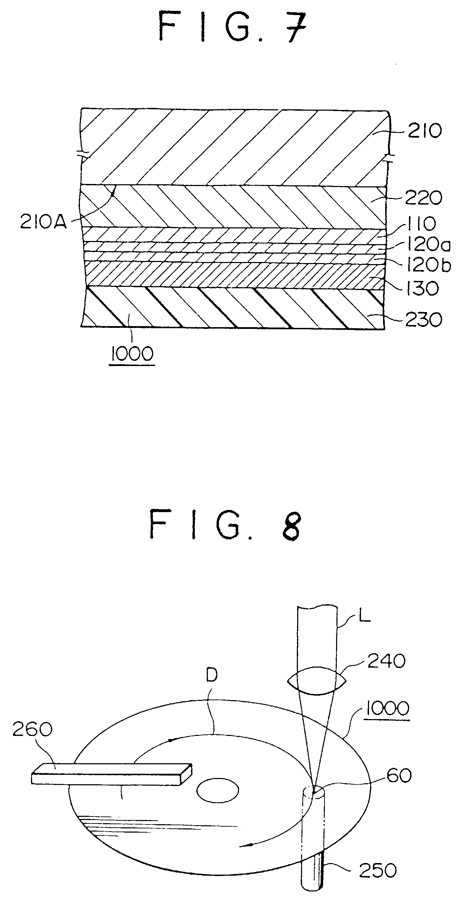

A magneto-optic recording/reproducing system in a preferred embodiment according to the present invention will be described hereinafter with reference to Figures 6 to 10. The magneto-optic recording/reproducing system employs a four-layer magneto-optic recording medium 1000 (Figure 7) having a magnetic layer consisting of a reproducing layer 110, an auxiliary layer 120a, an intermediate layer 120b, and a recording layer 130. The reproducing layer 110 and the auxiliary layer 120a, which contribute to reproducing, are formed so that the coercive force $H_{CA}$ has desired temperature characteristics. The auxiliary layer 120a is formed of a material having a comparatively low Curie temperature.

The magneto-optic recording medium 1000 has a construction as shown in an enlarged schematic sectional view in Figure 7. As shown in Figure 7, a dielectric film 220, such as a SiN film, is formed over a major surface 210A of a transparent substrate 210 of polycarbonate (PC) cr the like in a thickness of, for example, 800Å by sputtering or the like. GdFeCoAl film, for example a $Gd_{23}(Fe_{85}Co_{15})_{77}$ film of 300 Å in thickness, is formed as the reproducing layer 110. A TbFeCoAl film, for example a $Tb_{12}(Fe_{95}Co_{5})_{83}Al_{5}$ of 80 Å in thickness, is formed as the auxiliary layer 120a. A GdFeCo film, for example a $Gd_{20}(Fe_{95}Co_{5})_{80}$ of 150 Å in thickness, is formed as the intermediate layer 120. A TbFeCo film, for example a $Tb_{25}(Fe_{85}Co_{15})_{75}$ of 450 Å in thickness, is formed as the recording layer 130 by continuous sputtering or the like. The layers 110, 120a, 120 and 130 are coated with a surface protective film 230 formed of SiN or the like in a thickness of 800 Å by sputtering or the like.

The reproducing layer 110, the auxiliary layer 120a, the intermediate layer 120b, and the recording layer 130 have Curie temperatures and coercive forces tabulated in Table 1.

(Table 1)

| | Curie temperature | Coercive force |
|---|---|---|
| Reproducing layer | Lower than 300°C | 1 to 4 kOe in average |
| Auxiliary layer | 160°C | |
| Intermediate layer | 250°C 100 Oe | |
| Recording layer | 230°C | Smaller than 10 kOe |

The magneto-optic recording/reproducing system employing the magneto-optic recording medium 1000 thus constructed will be described hereinafter. As shown in a schematic perspective view in Figure 8, an optical system including an objective lens 240 for focusing, for example a laser beam, is disposed so as to irradiate the surface of the magneto-optic recording medium 1000 on the side of the substrate 210 to irradiate the upper surface of the magneto-optic recording medium 1000 with a reading light beam L. A reproducing magnet 250 is provided for applying a reproducing magnetic field $H_r$ to the magneto-optic recording medium 1000. It is disposed directly below the objective lens 240 on the opposite side of the magneto-optic recording medium 1000 with respect to the optical system. An initializing magnet 260 is disposed at a position before the track corresponding to the objective lens 240 and the reproducing magnet 250 with respect to the direction of movement of the magneto-optic recording medium 1000, and is separated a sufficient distance from the reproducing magnet 250 so that the initializing magnet 260 may not affect the reproducing magnetic field $H_r$. The polarity of the magnetic field created by the reproducing magnet 250 and that of the magnetic field created by the initializing magnet 260 are the same.

When the layers have the foregoing coercive forces, and the initializing magnet field $H_i$ is in the range of 1 to 4 kOe, for example, 4 kOe, an expression in Mathematical 8 must be satisfied to turn the respective directions of magnetization of the reproducing layer 110 and the auxiliary layer 120a in the direction of the initializing magnetic field $H_i$ by the initializing magnet 260 as shown in Figure 9A.

$$\text{(Mathematical 8)} \qquad H_i > H_{CA} + \sigma_{w2}/2(M_{s1} \cdot h_1 + M_{s2} \cdot h_{s2})$$

where $H_{CA}$ is the effective average coercive force of the coercive force $H_{c1}$ of the reproducing layer 110 and the coercive force $h_{cs}$ of the auxiliary layer 120a. $H_{CA}$ is expressed by:

$$H_{CA} = (M_{s1} \cdot h_1 \cdot H_{c1} + M_{ss} \cdot h_s \cdot H_{cs})/(M_{s1} \cdot h_1 + M_{ss} \cdot h_s)$$

where $M_{s1}$ and $M_{ss}$ are the saturation magnetizations of the reproducing layer 110 and the auxiliary layer 120a, respectively, and $h_1$ and $h_s$ are the values of thickness of the reproducing layer 110 and the auxiliary layer 120a, respectively. In the expression in Mathematical 8, $\sigma_{w2}$ is the domain wall energy of the intermediate layer 120b. The expression in Mathematical 8 corresponds to the expression in Mathematical 2 determining conditions for the aforesaid MSR system.

The recording layer 130 has a comparatively large coercive force and is capable of maintaining the direction of magnetization of the same determined during recording operation. To enable the recording layer 130 to maintain the direction of magnetization determined during recording operation, an expression in Mathematical 9 must be satisfied.

$$\text{(Mathematical 9)} \qquad H_i < H_{c3} - \sigma_{w2}/2M_{s3} \cdot h_3$$

where $H_{c3}$, $M_{s3}$, and $h_3$ are the coercive force, saturation magnetization and thickness, respectively, of the recording layer 130. The conditions determined by the expression in Mathematical 9 correspond to those determined by the expression in Mathematical 3.

An expression in Mathematical 10 must be satisfied to hold the directicn of magnetization of the recording layer 130, and the magnetization of the initialized reproducing layer 110 and the auxiliary layer 120a reverse to each other.

$$\text{(Mathematical 10)} \qquad H_{CA} > \sigma_{w2}/2(M_{s1} \cdot h_1 + M_{ss} \cdot h_s)$$

The conditions determined by the expression in Mathematical 10 correspond to those determined by the expression in Mathematical 4.

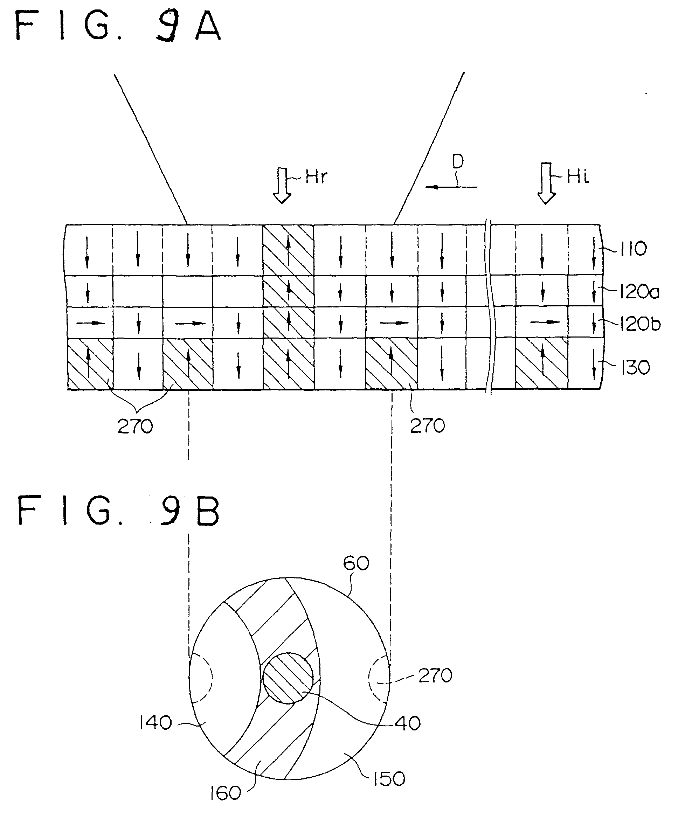

The reproducing magnetic field $H_r$ is applied to an area on the magneto-optic recording medium 1000 corresponding to the spot 60 of the reading light beam. When the magneto-optic recording medium 1000 moves in the direction of an arrow D as shown in Figure 9A, the temperature of the area on the magneto-optic recording medium 1000 rises gradually in the spot 60, and the area is heated to a temperature distribution in which the temperature of a region slightly ahead of the center of the spot 60 is the highest and the temperature decreases toward the opposite sides of the peak. As shown in Figure 9B, a high-temperature region 140 heated at a temperature not lower than the Curie temperature $T_{c2}$ of the intermediate layer is biased to the left, as viewed in Figure 9B, with respect to the center of the spot 60. Therefore, the auxiliary layer 120a having a Curie temperature of 140°C is demagnetized. Consequently, the direction of magnetization of a region of the reproducing layer 110 in the high-temperature region 140 is turned in the direction of the reproducing magnetic field $H_r$.

A reproducible region 160 heated at a temperature lower than that of the high-temperature region 140 is formed in the shape of a circular arc between the high-temperature region 140 and a low-temperature region 150. As indicated by a shaded area in Figure 6C, the temperature of the reproducible region 160 is lower than the Curie temperature $T_{c2}$ of the auxiliary layer 120a and not lower than a predetermined temperature $T_B$. The reproducible region 160 satisfies an equality: $H_r + H_{CA} < H_{w1} \cdot H_{CA}$ defined by the expression in Mathematical 6.

When the magnetic field $H_{w1}$ created by the magnetic domain wall formed between the auxiliary layer 120a and the intermediate layer 120b is greater than the sum of the reproducing magnetic field $H_r$ and the average coercive force $H_{CA}$ of the reproducing layer 110 and the auxiliary layer 120a, the respective directions of magnetization of the reproducing layer 110 and the auxiliary layer 120a are turned in the direction of magnetization of the recording layer 130 against the reproducing magnetic field $H_r$. That is, the direction of magnetization of the recording layer 130 reverse to the direction of the reproducing magnetic field $H_r$ is transferred to the reproducing layer 110.

The low-temperature region 150 in the spot 60 and which is heated at a temperature lower than that of the reproducible region 160, namely heated at a temperature lower than the predetermined temperature $T_B$, has a crescent shape. Since the low-temperature region 150 does not satisfy the expression in Mathematical 1, the direction of magnetization of the reproducing layer 110 in the low-temperature region remains in the direction of the initializing magnetic field $H_r$, which is the same as that of magnetization of the reproducing layer 110 in the high-temperature region 140. Accordingly, the recording bits in the high-temperature region 140 and the low temperature region 150 in the spot 60 are not transferred to the reproducing layer 110, and are held in latent recording bits 270 in the recording layer 130 as shown in Figures 9A and 9B. Only the recording bit 40 in the narrow reproducible region 160 is transferred to the reproducing layer 110. Since the reproducing region 160 is a narrow region between the high-temperature region 140 and the low-temperature region 150, high-density recorded information can be reproduced at a high resolution.

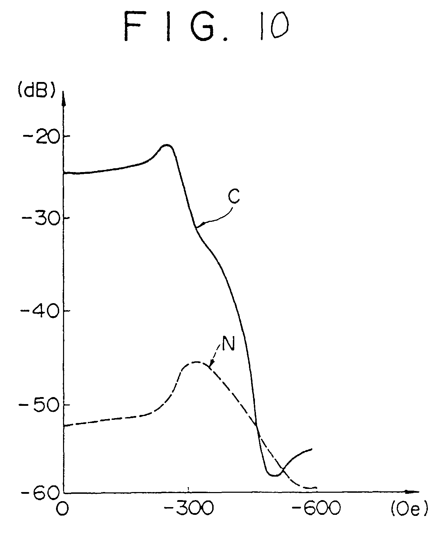

Figure 10 shows measured output characteristics when the four-layer magneto-optic recording medium 1000 was rotated at 2400 rpm, an initializing magnetic field of 4 koe was applied to the magneto-optic recording medium 1000, the magneto-optic recording medium 1000 was irradiated with a reading light beam L of 3.3 mW in power, and a signal of 10 MHz recorded on a track at a distance r of 30 mm from the center of the magneto-optic recording medium 1000 was reproduced. In Figure 10, a continuous curve C indicates the output signal, and a broken curve N indicates output noise. The average coercive force $H_{CA}$ of the reproducing layer 110 and the auxiliary layer 120a was 4 kOe, the coercive force of the intermediate layer 120b was 1 kOe, and the coercive force of the recording layer 130 was 15 kOe. As is obvious from Figure 10, the magneto-optic recording/reproducing system in accordance with the present invention is capable of reproducing a high-frequency signal of a frequency as high as 10 MHz at a satisfactory C/N ratio and at a high resolution by using a reproducing magnetic field $H_r$ on the order of 300 Oe or below at which the difference between the curve C and the curve N is large.

In this embodiment, the initializing magnet 260 is disposed before a position where the signals recorded on the magneto-optic recording medium 1000 are read with respect to the direction of movement of the magneto-optic recording medium 1000. It is also possible to omit the initializing magnet 260 and to turn the direction of magnetization of the reproducing layer 110 in the direction of the reproducing magnetic field $H_r$ immediately after recording, or immediately before reproducing by applying a magnetic field of the same direction and the same intensity as those of the reproducing magnetic field $H_r$ to the magneto-optic recording medium 1000 with the reproducing magnet 250 for reading information in a high resolution.

The present invention is applicable to magneto-optic recording media of various constructions other than that of the foregoing magneto-optic recording medium 1000. For example, the present invention is applicable to a three-layer magneto-optic recording medium having a reproducing layer 110 of $Gd_{24}(Fe_{85}Co_{15})_{76}$, an intermediate layer 120 of $Tb_{18}Fe_{82}$ and a recording layer 130 of $Tb_{25}(Fe_{85}Co_{15})_{75}$, and not provided with the auxiliary layer 120a. When such a magneto-optic recording medium is employed, the coercive force $H_{CA}$ of the layers contributing to reproducing in the expression in Mathematical 1 is substituted by coercive force $H_{c1}$, and the coercive force, thickness, magnetization and domain wall energy of each layer are determined selectively so that the expressions in Mathematical 2, Mathematical 3 and Mathematical 4 instead of those in Mathematical 6, Mathematical 9 and Mathematical 10 are satisfied.

When conditions defined by those expressions are satisfied, information recorded in the three-layer magneto-optic recording medium can be reproduced at a high resolution.

As is apparent from the foregoing description, since the magneto-optic recording/reproducing system in accordance with the present invention reproduced information from the narrow reproducible region 160 between the high-temperature region 140 and the low-temperature region 150 in the spot 60 of the reproducing light beam, and the reproducible region 160 is narrower than that in the MSR system, the magneto-optic recording/reproducing system in accordance with the present invention is capable of surely reading information from a magneto-optic recording medium 1000 having recording bits 40 in the spot 60 of the reading light beam in a higher density. Furthermore, even if the area of the spot 60 is increased by increasing the power of the reproducing laser beam to increase the reproducing output, the magneto-optic recording/reproducing system is able to reproduce the information in a sufficiently high resolution higher than the resolution of the conventional reproducing system, and hence the magneto-optic recording/reproducing system improves C/N (S/N).

Still further, the device for carrying out the magneto-optic recording/reproducing system can be simplified by omitting the initializing magnetic field creating means and turning the direction of magnetization of the reproducing layer in one direction immediately before reproducing by the reproducing magnetic field creating means.

## Claims

**1.** A method of reproducing signals recorded on a magneto-optic recording medium, said recording medium being formed of at least a record hold layer (130) and a reproducing layer (110), and wherein information to be reproduced is recorded in the record hold layer, comprising the steps of:

irradiating a spot (60) of a laser beam on the recording medium with relative motion being provided such that the spot moves relative to the recording medium;
providing at least one external magnetic field ($H_r$) to effect the recording medium for reproducing; and
designing the recording layer and reproducing layer such that within an area of the spot of the laser bean a temperature distribution is generated in the recording medium, and wherein as a result of the temperature distribution, within the spot a first region (140), second region (160), and third region (150) result with the second region lying between the first and third regions and having information recorded in the record hold layer transferred to the reproducing layer for readout therefrom by magneto-optical effect with the laser beam, and wherein magnetic domains within the reproducing layer first region are all aligned in a first desired direction independently of magnetic domain signal patterns in the record hold layer, and wherein magnetic domains in the third region are aligned in a second desired direction independently of magnetic domain signal patterns in the record hold layer, and wherein said first and third regions each act as a mask at each side of the second region where readout occurs at high resolution, characterized in that said first desired direction of the magnetic domains in said first region Is the same direction as said second desired direction of the magnetic domains in said third region.

**2.** A method according to claim 1 wherein the temperature distribution is such that the first region has a relatively high temperature, the second region has a relatively intermediate temperature lower than the high temperature, and the third region has a relatively low temperature lower than the intermediate temperature.

**3.** A method according to claim 1 wherein an external readout magnetic field is provided within the area of the laser spot.

**4.** A method according to claim 1 wherein an initializing magnetic field is provided outside the laser spot.

**5.** A method according to claim 1 wherein an initializing magnetic field is provided outside the laser spot and a readout magnetic field is provided at least within the area of the laser spot.

**6.** A method according to claim 1 wherein the first and second desired directions of the magnetic domains in the first and third regions are the same direction and wherein a readout magnetic field is provided at an area of the laser spot and no separate initializing field is provided.

**7.** A method according to claim 1 wherein an intermediate layer is provided between the record hold layer and the reproducing layer.

**8.** A method according to claim 7 wherein an auxiliary reproducing layer is provided between the intermediate layer and the reproducing layer.

**9.** A method according to claim 1 including the steps of providing an auxiliary reproducing layer between the record hold layer and reproducing layer, and forming the reproducing layer of a ferrimagnetic material having a compensation temperature substantially equal to a Curie temperature of the auxiliary reproducing layer.

**10.** A method according to claim 7 wherein

a portion of the intermediate layer in the first region is heated to a temperature not lower than a Curie temperature of the intermediate layer, and wherein
the second region is provided such that $H_r + H_{ca} < H_{w1}$ where $H_{ca}$ is a coercive force of the reproducing layer and $H_{w1}$ is a magnetic field created by a magnetic domain wall between the reproducing layer and the intermediate layer.

**11.** A method according to claim 10 wherein an auxiliary reproducing layer is provided between the intermediate layer an the reproducing layer. and wherein $H_{CA}$ is a combined coercive force of the reproducing layer and auxiliary reproducing layer.

**12.** A system for reproducing signals recorded on a magneto-optic recording medium, comprising:

recording medium (1000) being formed of at least a record hold layer (130) and a reproducing layer (110), and wherein information to be reproduced is recorded in the record hold layer;
laser beam reproducing means for irradiating a spot (60) on the recording medium with relative motion being provided such that the spot moves relative to the recording medium;
external magnetic field generating means (250) for generating a magnetic field ($H_r$) for use in reproducing the information recorded in the record hold layer; and
said recording medium having means for providing a temperature distribution within an area of the spot of the laser beam such that as a result of the temperature distribution, within the spot a first region (140), second region (160), and third region (150) result with the second region lying between the first and third regions, and said reproducing layer at the second region having magnetic domains representing information recorded in the record hold layer and transferred to the reproducing layer, and magnetic domains of the first and third regions being aligned independently of magnetic domain signal patterns in the second region of the reproducing layer within the spot such that the first and third regions form masks at opposite sides of the second region, characterized in that the first desired direction of the magnetic domains in said first region is the same direction as the second desired direction of the magnetic domains in said third region.

**13.** A magneto-optic recording/reproducing system according to claim 12,
wherein an intermediate layer (120) is provided between the record hold layer (130) and the reproducing layer (110), wherein said laser beam reproducing means is designed such that a portion of the intermediate layer (120) in the first region (140) is heated to a temperature not lower than the Curie temperature of the intermediate layer (120); and
at the second region, the following expression is satisfied:

$$H_r + H_{CA} < H_{w1}$$

where $H_{CA}$ is a coercive force of the reproducing layer and $H_{w1}$ is a magnetic field created by a magnetic domain wall between the reproducing layer and the intermediate layer.

**14.** A magneto-optic recording/reproducing system according to claim 13, wherein a magnetic field for initializing the reproducing layer is not provided.

**15.** A magneto-optic recording/reproducing system according to claim 14, wherein an auxiliary reproducing layer is provided and wherein said reproducing layer and said auxiliary reproducing layer are formed of magnetic materials that are rare earth metal-rich at room temperature.

## Patentansprüche

1. Verfahren zum Abspielen von auf einem magnetooptischen Aufzeichnungsträger aufgezeichneten Signalen, wobei der Aufzeichnungsträger mindestens aus einer Aufzeichnungs-Aufrechterhalteschicht (130) und einer Abspielschicht (110) besteht, wobei abzuspielende Information in der Aufzeichnungs-Aufrechterhalteschicht aufgezeichnet ist, mit den folgenden Schritten:

   - Einstrahlen eines Flecks (60) eines Laserstrahls auf den Aufzeichnungsträger, wobei eine Relativbewegung so vorhanden ist, dass der Fleck relativ zum Aufzeichnungsträger läuft;
   - Bereitstellen mindestens eines äußeren Magnetfelds ($H_r$) zum Veranlassen des Aufzeichnungsträgers, einen Abspielvorgang auszuführen; und
   - Konzipieren der Aufzeichnungsschicht und der Abspielschicht in solcher Weise, dass im Aufzeichnungsträger innerhalb eines Gebiets des Flecks des Laserstrahls eine Temperaturverteilung erzeugt wird, wobei sich als Ergebnis der Temperaturverteilung innerhalb des Flecks ein erster Bereich (140), ein zweiter Bereich (160) und ein dritter Bereich (150) ergeben, wobei der zweite Bereich zwischen dem ersten und dritten Bereich liegt, wobei in der Aufzeichnungs-Aufrechterhalteschicht aufgezeichnete Information an die Abspielschicht übertragen wird, um aus dieser durch einen magnetooptischen Effekt mittels des Laserstrahls ausgelesen zu werden, und wobei magnetische Domänen innerhalb des ersten Bereichs der Abspielschicht unabhängig von Magnetdomänen-Signalmustern in der Aufzeichnungs-Aufrechterhalteschicht alle in einer ersten gewünschten Richtung ausgerichtet werden, und wobei Magnetdomänen im dritten Bereich unabhängig von Magnetdomänen-Signalmustern in der Aufzeichnungs-Aufrechterhalteschicht in einer zweiten gewünschten Richtung ausgerichtet werden, und wobei der erste und der dritte Bereich jeweils als Maske auf jeder Seite des zweiten Bereichs wirken, wo Auslesen mit hoher Auflösung erfolgt;

   **dadurch gekennzeichnet, dass** die erste gewünschte Richtung der Magnetdomänen im genannten ersten Bereich dieselbe Richtung wie die zweite gewünschte Richtung der Magnetdomänen im dritten Bereich ist.

2. Verfahren nach Anspruch 1, bei dem die Temperaturverteilung dergestalt ist, dass der erste Bereich eine relativ hohe Temperatur aufweist, der zweite Bereich eine relative Zwischentemperatur unter der hohen Temperatur aufweist und der dritte Bereich eine relativ niedrige Temperatur unter der Zwischentemperatur aufweist.

3. Verfahren nach Anspruch 1, bei dem ein äußeres Auslesemagnetfeld innerhalb des Gebiets des Laserflecks angelegt wird.

4. Verfahren nach Anspruch 1, bei dem ein Initialisierungsmagnetfeld außerhalb des Laserflecks angelegt wird.

5. Verfahren nach Anspruch 1, bei dem ein Initialisierungsmagnetfeld außerhalb des Laserflecks angelegt wird und ein Auslesemagnetfeld zumindest innerhalb des Gebiets des Laserflecks angelegt wird.

6. Verfahren nach Anspruch 1, bei dem die erste und die zweite gewünschte Richtung der Magnetdomänen im ersten und dritten Bereich dieselbe Richtung sind und bei dem ein Auslesemagnetfeld in einem Gebiet des Laserflecks angelegt wird und kein gesondertes Initialisierungsfeld verwendet wird.

7. Verfahren nach Anspruch 1, bei dem eine Zwischenschicht zwischen der Aufzeichnungshalteschicht und der Abspielschicht bereitgestellt wird.

8. Verfahren nach Anspruch 7, bei dem eine Hilfsabspielschicht zwischen der Zwischenschicht und der Abspielschicht bereitgestellt wird.

9. Verfahren nach Anspruch 1, mit den Schritten des Bereitstellens einer Hilfsabspielschicht zwischen der Aufzeichnungs-Aufrechterhalteschicht und der Abspielschicht sowie des Herstellens der Abspielschicht aus einem ferrimagnetischen Material mit einer Kompensationstemperatur, die im wesentlichen der Curietemperatur der Hilfsabspielschicht entspricht.

10. Verfahren nach Anspruch 7, bei dem

    - ein Teil der Zwischenschicht im ersten Bereich auf eine Temperatur nicht unter der Curietemperatur der Zwischenschicht erwärmt wird; und

- der zweite Bereich so bereitgestellt wird, dass $H_r + H_{CA} < H_{w1}$ gilt, wobei $H_{CA}$ die Koerzitivfeldstärke der Abspielschicht ist und $H_{w1}$ das Magnetfeld ist, wie es von einer Magnetdomänenwand zwischen der Abspielschicht und der Zwischenschicht erzeugt wird.

**11.** Verfahren nach Anspruch 10, bei dem eine Hilfszwischenschicht zwischen der Zwischenschicht und der Abspielschicht bereitgestellt wird und $H_{CA}$ die kombinierte Koerzitivfeldstärke der Abspielschicht und der Hilfsabspielschicht ist.

**12.** System zum Abspielen von auf einem magnetooptischen Aufzeichnungsträger aufgezeichneten Signalen, mit:

- einem Aufzeichnungsträger (1000), der zumindest aus einer Aufzeichnungs-Aufrechterhalteschicht (130) und einer Abspielschicht (110) besteht, wobei abzuspielende Information in der Aufzeichnungs-Aufrechterhalteschicht aufgezeichnet ist;
- einer Laserstrahl-Abspieleinrichtung zum Aufstrahlen eines Flecks (60) auf den Aufzeichnungsträger, wobei eine Relativbewegung so vorliegt, dass sich der Fleck relativ zum Aufzeichnungsträger bewegt;
- einer Erzeugungseinrichtung (250) für ein äußeres Magnetfeld zum Erzeugen eines Magnetfelds ($H_r$) zur Verwendung beim Abspielen der in der Aufzeichnungs-Aufrechterhalteschicht aufgezeichneten Information;
- wobei der Aufzeichnungsträger eine Einrichtung zum Erzeugen einer Temperaturverteilung innerhalb eines Gebiets des Flecks des Laserstrahls in solcher Weise aufweist, dass sich als Ergebnis der Temperaturverteilung innerhalb des Flecks ein erster Bereich (140), ein zweiter Bereich (160) und ein dritter Bereich (150) ergeben, wobei der zweite Bereich zwischen dem ersten und dem dritten Bereich liegt, und wobei die Abspielschicht im zweiten Bereich Magnetdomänen aufweist, die in der Aufzeichnungs-Aufrechterhalteschicht aufgezeichnete Information repräsentieren, die an die Abspielschicht übertragen ist, und wobei Magnetdomänen des ersten und dritten Bereichs unabhängig von Magnetdomänen-Signalmustern im zweiten Bereich der Abspielschicht innerhalb des Flecks so ausgerichtet sind, dass der erste und dritte Bereich Masken an entgegengesetzten Enden des zweiten Bereichs bilden;

**dadurch gekennzeichnet, dass** die erste gewünschte Richtung der Magnetdomänen im ersten Bereich dieselbe Richtung wie die zweite gewünschte Richtung der Magnetdomänen im dritten Bereich ist.

**13.** Magnetooptisches Aufzeichnungs-/Wiedergabesystem nach Anspruch 12, bei dem eine Zwischenschicht (120) zwischen der Aufzeichnungs-Aufrechterhalteschicht (130) und der Abspielschicht (110) vorhanden ist, wobei die Laserstrahl-Abspieleinrichtung so konzipiert ist, dass ein Teil der Zwischenschicht (120) im ersten Bereich (140) auf eine Temperatur nicht unter der Curietemperatur der Zwischenschicht (120) erwärmt wird, und im zweiten Bereich der folgende Ausdruck erfüllt ist:

$$H_r + H_{CA} < H_{w1},$$

wobei $H_{CA}$ die Koerzitivfeldstärke der Abspielschicht ist und $H_{w1}$ ein Magnetfeld ist, wie es von einer Magnetdomänenwand zwischen der Abspielschicht und der Zwischenschicht erzeugt wird.

**14.** Magnetooptisches Aufzeichnungs-/Wiedergabesystem nach Anspruch 13, bei dem kein Magnetfeld zum Initialisieren der Abspielschicht bereitgestellt ist.

**15.** Magnetooptisches Aufzeichnungs-/Wiedergabesystem nach Anspruch 14, bei dem eine Hilfsabspielschicht vorhanden ist und bei dem die Abspielschicht und die Hilfsabspielschicht aus magnetischen Materialien bestehen, bei denen bei Raumtemperatur der Einfluss des Seltenerdmetalls überwiegt.

## Revendications

**1.** Méthode pour la reproduction des signaux enregistrés sur un support d'enregistrement magnéto-optique, ledit support d'enregistrement comprenant au moins une couche de maintien d'enregistrement (130) et une couche de reproduction (110), et dans laquelle les informations à reproduire sont enregistrées dans la couche de maintien d'enregistrement, comprenant les étapes consistant à :

appliquer un spot (60) d'un faisceau laser sur le support d'enregistrement en prévoyant un mouvement relatif tel que le spot se déplace par rapport au support d'enregistrement ;
prévoir au moins un champ magnétique extérieur ($H_r$) pour affecter le support d'enregistrement pour reproduire ; et
concevoir la couche d'enregistrement et la couche de reproduction telles que, à l'intérieur d'une zone du spot du faisceau laser, une distribution des températures soit générée dans le support d'enregistrement, et dans laquelle, il résulte, à la suite de la distribution des températures, à l'intérieur du spot, une première région (140), une seconde région (160) et une troisième région (150), avec la seconde région se trouvant entre les première et troisième régions et ayant les informations enregistrées dans la couche de maintien d'enregistrement transférées vers la couche de reproduction pour en être extraites par effet magnéto-optique avec le faisceau laser, et dans laquelle les domaines magnétiques dans la première région de la couche de reproduction sont tous alignés dans une première direction souhaitée indépendamment des configurations de signaux de domaine magnétique dans la couche de maintien d'enregistrement, et dans laquelle les domaines magnétiques dans la troisième région sont alignés dans une seconde direction souhaitée indépendamment des configurations de signaux de domaine magnétique dans la couche de maintien d'enregistrement, et dans laquelle lesdites première et troisième régions agissent chacune comme un masque de chaque côté de la seconde région où la lecture se produit avec une haute résolution, caractérisée en ce que ladite première direction souhaitée des domaines magnétiques dans ladite première région est la même direction que ladite seconde direction souhaitée des domaines magnétiques dans ladite troisième région.

**2.** Méthode selon la revendication 1, dans laquelle la distribution des températures est telle que la première région présente une température relativement élevée, la seconde région présente une température relativement intermédiaire inférieure à la température élevée et la troisième région présente une température relativement basse inférieure à la température intermédiaire.

**3.** Méthode selon la revendication 1, dans laquelle un champ magnétique de lecture externe est prévu à l'intérieur de la zone du spot du laser.

**4.** Méthode selon la revendication 1, dans laquelle un champ magnétique d'initialisation est prévu à l'extérieur du spot du laser.

**5.** Méthode selon la revendication 1, dans laquelle un champ magnétique d'initialisation est prévu à l'extérieur du spot du laser et un champ magnétique de lecture est prévu au moins à l'intérieur de la zone du spot du laser.

**6.** Méthode selon la revendication 1, dans laquelle les première et seconde directions souhaitées des domaines magnétiques dans les première et troisième régions sont de la même direction et dans laquelle un champ magnétique de lecture est prévu dans une zone du spot du laser et aucun champ d'initialisation séparé n'est prévu.

**7.** Méthode selon la revendication 1, dans laquelle une couche intermédiaire est prévue entre la couche de maintien d'enregistrement et la couche de reproduction.

**8.** Méthode selon la revendication 7, dans laquelle une couche de reproduction auxiliaire est prévue entre la couche intermédiaire et la couche de reproduction.

**9.** Méthode selon la revendication 1, comprenant les étapes consistant à prévoir une couche de reproduction auxiliaire entre la couche de maintien d'enregistrement et la couche de reproduction et à former la couche de reproduction en un matériau ferromagnétique présentant une température de compensation sensiblement égale à une température de Curie de la couche de reproduction auxiliaire.

**10.** Méthode selon la revendication 7, dans laquelle une partie de la couche intermédiaire dans la première région est chauffée à une température supérieure ou égale à une température de Curie de la couche intermédiaire et dans laquelle la seconde région est prévue telle que $H_r + H_{CA} < H_{w1}$ OÙ $H_{CA}$ est une force coercitive de la couche de reproduction et $H_{w1}$ est un champ magnétique créé par une paroi de domaine magnétique entre la couche de reproduction et la couche intermédiaire.

**11.** Méthode selon la revendication 10, dans laquelle une couche de reproduction auxiliaire est prévue entre la couche intermédiaire et la couche de reproduction, et dans laquelle $H_{CA}$ est une force coercitive combinée de la couche de reproduction et de la couche de reproduction auxiliaire.

**12.** Système pour la reproduction des signaux enregistrés sur un support d'enregistrement magnéto-optique, comprenant :

un support d'enregistrement (1000) comprenant au moins une couche de maintien d'enregistrement (130) et une couche de reproduction (110), et dans lequel les informations à reproduire sont enregistrées dans la couche de maintien d'enregistrement ;
des moyens de reproduction à faisceau laser pour appliquer un spot (60) sur le support d'enregistrement en prévoyant un mouvement relatif tel que le spot se déplace par rapport au support d'enregistrement ;
des moyens de génération de champ magnétique extérieur (250) pour générer un champ magnétique ($H_r$) destiné à être utilisé pour reproduire les informations enregistrées dans la couche de maintien d'enregistrement ; et
ledit support d'enregistrement comportant des moyens destinés à assurer une distribution des températures dans une zone du spot du faisceau laser telle qu'il en résulte, à la suite de la distribution des températures, à l'intérieur du spot, une première région (140), une seconde région (160) et une troisième région (150) avec la seconde région se trouvant entre les première et troisième régions, et ladite couche de reproduction à la seconde région ayant des domaines magnétiques représentant les informations enregistrées dans la couche de maintien d'enregistrement et transférées vers la couche de reproduction, et les domaines magnétiques des première et troisième régions étant alignés indépendamment des configurations de signaux de domaine magnétique dans la seconde région de la couche de reproduction à l'intérieur du spot, de sorte que les première et troisième régions forment des masques aux côtés opposés de la seconde région, caractérisé en ce que la première direction souhaitée des domaines magnétiques dans ladite première région est la même direction que la seconde direction souhaitée des domaines magnétiques dans ladite troisième région.

**13.** Système d'enregistrement/reproduction magnéto-optique selon la revendication 12, dans lequel une couche intermédiaire (120) est prévue entre la couche de maintien d'enregistrement (130) et la couche de reproduction (110), dans lequel lesdits moyens de reproduction à faisceau laser sont conçus de sorte qu'une partie de la couche intermédiaire (120) dans la première région (140) soit chauffée à une température supérieure ou égale à la température de Curie de la couche intermédiaire (120) ; et qu'à la seconde région, l'expression suivante soit satisfaite :

$$H_r + H_{CA} < H_{w1}$$

où $H_{CA}$ est une force coercitive de la couche de reproduction et Hw1 est un champ magnétique créé par une paroi de domaine magnétique entre la couche de reproduction et la couche intermédiaire.

**14.** Système d'enregistrement/reproduction magnéto-optique selon la revendication 13, dans lequel un champ magnétique pour initialiser la couche de reproduction n'est pas prévu.

**15.** Système d'enregistrement/reproduction magnéto-optique selon la revendication 14, dans lequel une couche de reproduction auxiliaire est prévue et dans lequel ladite couche de reproduction et ladite couche de reproduction auxiliaire sont constituées de matériaux magnétiques qui sont riches en métaux des terres rares à température ambiante.

FIG. 1A

3
1
2
1
4
6
4

FIG. 1B

FIG. 1C

FIG. 1D

0

FIG. 2A

4a
4b
4c
3
1
2
1
6
4

FIG. 2B

4a
4b

FIG. 2C

4b
4c

FIG. 2D

F I G. 3A
D
10
6
1
a
2
1
4
14
15

F I G. 3B

6
10
D
4
4
Hi
11
12
13
Hr
41
4

FIG. 4

4
6
11
17
12
13

FIG. 5A
D
10
6
4
1
2
1
14
15
4
FIG. 5B
Hr
4
6
4
11
12
13
10
41

FIG. 6A

D
160
150
140
60

FIG. 6B

Hr
Hi
110
120
130
140
160
150
1000

FIG. 6C

Tc2
TB
140
160
150
D

FIG. 7

210
220
210A
110
120a
120b
130
230
1000

FIG. 8

L
240
D
1000
260
60
250

F I G. 9A
D
Hr
Hi
110
120a
120b
130
270
270
F I G. 9B
60
270
140
40
150
160

FIG. 10

(dB)
-20
-30
-40
-50
-60
C
N
0
-300
-600
(Oe)